# EUROPEAN PATENT SPECIFICATION

(11) **EP 2 398 192 B1**
(45) Date of publication and mention of the grant of the patent: **29.06.2016**
(21) Application number: 11162870.7
(22) Date of filing: 18.04.2011
(51) Int. Cl.: H04L 29/12, H04L 12/28

(54) **Home gateway virtual system and corresponding method**
Virtuelles Heim-Gateway-System und korrespondierendes Verfahren
Système virtuel de passerelle domestique et procédé correspondant

(30) Priority: 18.06.2010 JP 2010139498
(43) Date of publication of application: 21.12.2011
(73) Proprietor: NEC Corporation, Minato-ku Tokyo (JP)
(72) Inventor: Motoyama, Shoichi, Tokyo (JP); Miyashita, Shigehiro, Tokyo (JP)
(74) Representative: Betten & Resch

(56) References cited:
- WO-A1-2011/154861
- US-A- 4 680 756
- US-A1- 2008 205 419
- Poikselkä, M. and Mayer, G.: "The IMS: IP Multimedia Concepts and Services", 1 January 2009 (2009-01-01), Wiley ISBN: 978-0-470-72196-4 pages 333-344, * page 333 * * page 337 - page 344 *

## Description

### TECHNICAL FIELD

The present invention relates to a communication relay apparatus such as a gateway apparatus, a communication relay system and a communication relay method.

### BACKGROUND ART

In recent years, various in-home electronic apparatus (hereinafter, an electronic apparatus (for example, televisions, videos, and air conditioners) arranged in the local area such as home is also referred to as home equipment) have been to have a communication function. A home gateway apparatus which is a communication relay apparatus has a protocol conversion function. The home gateway apparatus enables to communicate between the home equipments in which a protocol is different, and by this communication, configures a home network. The home gateway apparatus has a function to connect the home equipment with an external communication network such as the Internet.

By the way, as indicated by Japanese Unexamined Patent Application Publication No. 2009 - 500898 (patent document 1), the home gateway apparatus have been to have the various functions. For example, in the function provided in the home gateway apparatus, there are an OSGi (Open Services Gateway initiative) function and a UPnP (Universal Plug and Play) function. The OSGi function hereof is a function based on the technical specification that is defined by OSGiAlliance which is a standard-setting organization. The OSGi function enables to manage the home equipment remotely. The UPnP function is a function to communicate by a communication protocol proposed by UpnP forum. The UPnP function, for example, enables to communicate between the home equipments directly without a personal computer (PC).

Document US 4 680 756 A discloses a multi-network system for transmitting data among a plurality of stations through a plurality of transmission lines, starting from a prior art multi-network system comprising a plurality of bridge stations and a plurality of ordinary stations, wherein each of bridge stations connects to two transmission lines and when data are transmitted between two stations connected to different transmission lines, the bridge station must read transmitted information, interpret the final destination station and modify the destination address and the source address.

Document US 2008/205419 A1 discloses a residential gate way system for home network service. In particular, a residential gateway system for providing home network service on the basis of Open Service Gateway initiative and Universal Plug and Play is disclosed.

In Poikselkä, M. and Mayer, G.: "The IMS: IP Multimedia Concepts and Services", 1 January 2009, Wiley, pages 333-344, provides discloses with respect to multimedia services over IP, such as voice and video calls.

In document WO 2011/154861 A1, a method for authenticating a device is disclosed. The method includes receiving, at communications node, a first message, wherein the first message includes a first Extensible Authentication Protocol (EAP) packet which includes an EAP (Identify) ID response and a first destination address; generating, by the communications node, a second message, wherein the second message includes the first EAP ID response and a second destination address which is different from the first destination address; and transmitting, by the communications node, the second message toward the second destination address.

### SUMMARY

An main object of the invention is to provide a communication relay apparatus, a communication relay system and a communication relay method which can achieve becoming multifunctional without worrying about a price increase.

The present invention is defined in the independent claims. The dependent claims define advantageous embodiments thereof.

A communication relay apparatus includes:
frame transfer means for, when a frame which is a unit of data transfer is received, changing destination information included in the frame from information indicating the own apparatus into information indicating a predetermined external communication apparatus without changing source information included in the frame and transferring the frame after the change to the external communication apparatus.

A communication relay system includes:
the communication relay apparatus; and
a communication control apparatus which is an external communication apparatus to which a frame is transmitted by frame transfer means included in the communication relay apparatus, wherein
the communication control apparatus includes communication means for replying the frame, in which source information extracted from the received frame is set as destination information, to a communication apparatus corresponding to the source information via the communication relay apparatus and establishing a communication connection with the communication apparatus via the communication relay apparatus.

A communication relaying method includes:
changing destination information included in a frame, which is a unit of data transfer, from information indicating the own apparatus into information indicating a predetermined external communication apparatus without changing source information included in the frame, when the frame is received; and
transferring the frame after the change to the external communication apparatus.

### BRIEF DESCRIPTION OF THE DRAWINGS

Exemplary features and advantages of the present invention will become apparent from the following detailed description when taken with the accompanying drawings in which:
Fig. 1A is a block diagram showing n control configuration which configures a communication relay apparatus according to a first exemplary embodiment;
Fig. 1B is a block diagram showing a control configuration which configures a communication relay system according to the first exemplary embodiment;
Fig. 2 is a flowchart showing an example of a control operation when transferring a frame according to the first exemplary embodiment ;
Fig. 3 is a block diagram showing a control configuration configuring a home gateway virtual system which is a communication relay system according to a second exemplary embodiment of the present invention;
Fig. 4 is a diagram illustrating an example of information included in the frame;
Fig. 5A is a diagram illustrating address information included in the frame transmitted for a communication control apparatus from the home equipment when a connection of the communication control apparatus and the home equipment (communication apparatus) is established according to the second exemplary embodiment of the present invention; and
Fig. 5B is a diagram illustrating address information included in the frame transmitted for the home equipment from the communication control apparatus when the connection of the communication control apparatus and the home equipment (communication apparatus) is established according to the second exemplary embodiment of the present invention.

### EXEMPLARY EMBODIMENT

The exemplary embodiments of the present invention will be described below with reference to the drawings.

### (First exemplary embodiment)

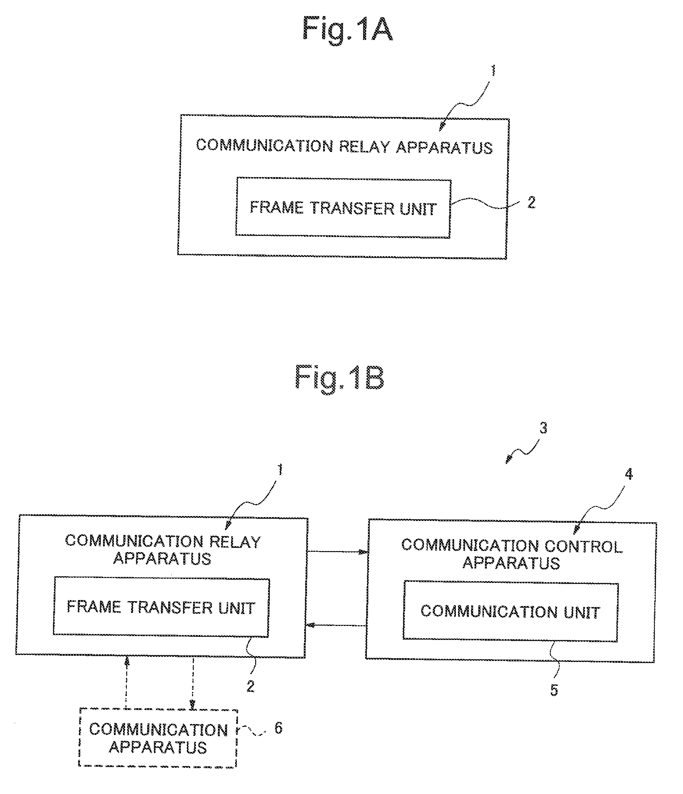

Fig. 1A is a block diagram showing a control configuration which configures a communication relay apparatus according to a first exemplary embodiment not falling under the scope of the claims. The communication relay apparatus 1 according to the first exemplary embodiment includes a frame transfer unit (frame transfer means) 2. The frame transfer unit 2 has a function to change destination information included in a frame, which is a unit of data transfer, from information (address information) indicating the own apparatus into information (address information) indicating a predetermined external communication apparatus when the frame is received. The frame transfer unit 2 has a function to transfer the frame after the change to the external communication apparatus. When transmitting the frame, the frame transfer unit 2 leaves source information, which is included in the received frame, without changing.

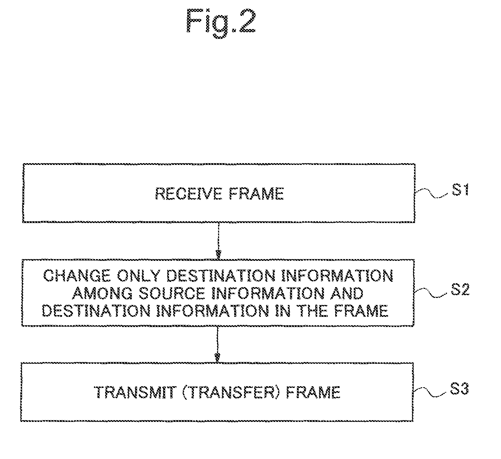

The frame transfer unit 2 operates as shown in Fig. 2. That is, Fig. 2 is a flowchart illustrating an example of operation of the frame transfer unit 2. When the frame is received (Step S1), the frame transfer unit 2 changes the destination information in the frame from the address information on the own apparatus into the address information on the predetermined external communication apparatus (Step S2). In this case, the frame transfer unit 2 leaves the source information included in the frame without changing. Subsequently, the frame transfer unit 2 transmits (transfers) the frame (Step S3).

The communication relay apparatus 1 can configure a communication relay system 3 as shown in Fig. 1B. That is, Fig. 1B is a block diagram showing the control configuration which configures the communication relay system according to the first exemplary embodiment. The communication relay system 3 is equipped with a communication control apparatus 4 in addition to the communication relay apparatus 1. The communication control apparatus 4 is the external communication apparatus which is the destination in the frame transferring by the frame transfer unit 2 of the communication relay apparatus 1. The communication control apparatus 4 includes a communication unit (communication means) 5. The communication unit 5 has a function to create a frame as follows using information included in the frame received from the communication relay apparatus 1. The created frame is a frame to which source information extracted from the received frame is set as destination information. The communication unit 5 has a function to reply the created frame to a communication apparatus 6. In this way, the communication unit 5 has a function to establish communication of the communication control apparatus 4 and the communication apparatus 6 via the communication relay apparatus 1.

In the first exemplary embodiment, when the frame is received, without changing the source information included in the frame, the communication relay apparatus 1 transmits (transfers) the frame to the communication control apparatus 4. As a result, the communication control apparatus 4 can obtain the address information on the communication apparatus 6 which is the source in the frame. In other words, when the communication relay apparatus 1 transfers the received frame to the communication control apparatus 4 from the communication apparatus 6, if the source information included in the frame is rewritten to the address information on the communication relay apparatus 1 thereon, the communication control apparatus 4 cannot obtain the address information on the communication apparatus 6. On the other hand, in the first exemplary embodiment, the communication relay apparatus 1, as mentioned above, transfers the frame that the address information on the communication apparatus 6 remains set to the communication control apparatus 4 as source information included in the frame. As a result, the communication control apparatus 4 can obtain the address information on the communication apparatus 6. The communication control apparatus 4 can establish the same communication as in the same home network (the broadcast domain) with the communication apparatus 6 via the communication relay apparatus 1.

In the first exemplary embodiment, the frame which the communication apparatus 6 transmitted for the communication relay apparatus 1 is transferred to the communication control apparatus 4 by the communication relay apparatus 1. The frame transmitted to the communication apparatus 6 from the communication control apparatus 4 is transferred to the communication apparatus 6 from the communication relay apparatus 1. For this reason, the communication apparatus 6 can recognize the communication relay apparatus 1 when the communication relay apparatus 1 side tries to be recognized, however, the communication apparatus 6 cannot recognize beyond the communication relay apparatus 1 to the communication control apparatus 4. Because of this, despite the function only to transfer the frame, the communication relay apparatus 1 is recognized for the communication apparatus 6 as if performing the function of the communication control apparatus 4.

For example, here, it is assumed that the communication relay apparatus 1 is a home gateway apparatus installed in homes. It is assumed that the communication apparatus 6 is a home equipment (such as television and air conditioner in homes) which connects with the communication relay apparatus 1. It is assumed that the communication control apparatus 4 is a managed dedicated server. It is assumed that the communication control apparatus 4 will have a home gateway function instead of the communication relay apparatus 1. In such case, although the communication control apparatus 4 performs the home gateway function instead of the communication relay apparatus 1, the communication relay apparatus 1 (in other words, home gateway apparatus) is recognized for the communication apparatus 6 as if performing the home gateway function.

For this reason, the following effect can be obtained. That is, the communication control apparatus 4 is, for example, the managed dedicated server. For this reason, in the communication control apparatus 4, compared with the communication relay apparatus 1, processing speed of an arithmetic unit (CPU: Central Processing Unit) is quick and storage capacity of a storage unit is large. Therefore, the manager managing the communication control apparatus 4 can plan to extend the home gateway function without having to worry about the storage capacity of the storage unit and the processing speed of the arithmetic unit (CPU) in the communication control apparatus 4 than in the case of extending the home gateway function in the communication relay apparatus 1. In the first exemplary embodiment, when the home gateway function of the communication control apparatus 4 is extended, the home gateway function of the communication relay apparatus 1 apparently extends. Thus, even if the home gateway function of the communication relay apparatus 1 extends apparently, in fact, the function of communication relay apparatus 1 does not change. For this reason, when the home gateway function is extended, increasing the processing speed of the arithmetic unit (CPU) and the capacity of the storage unit in the communication relay apparatus 1 does not have to be performed. As a result, a price increase of the communication relay apparatus 1 can be suppressed.

As mentioned above, the communication relay apparatus 1 and the communication relay system 3 which can achieve becoming multifunctional can be provided without worrying about the price increase in the first exemplary embodiment.

### (Second exemplary embodiment)

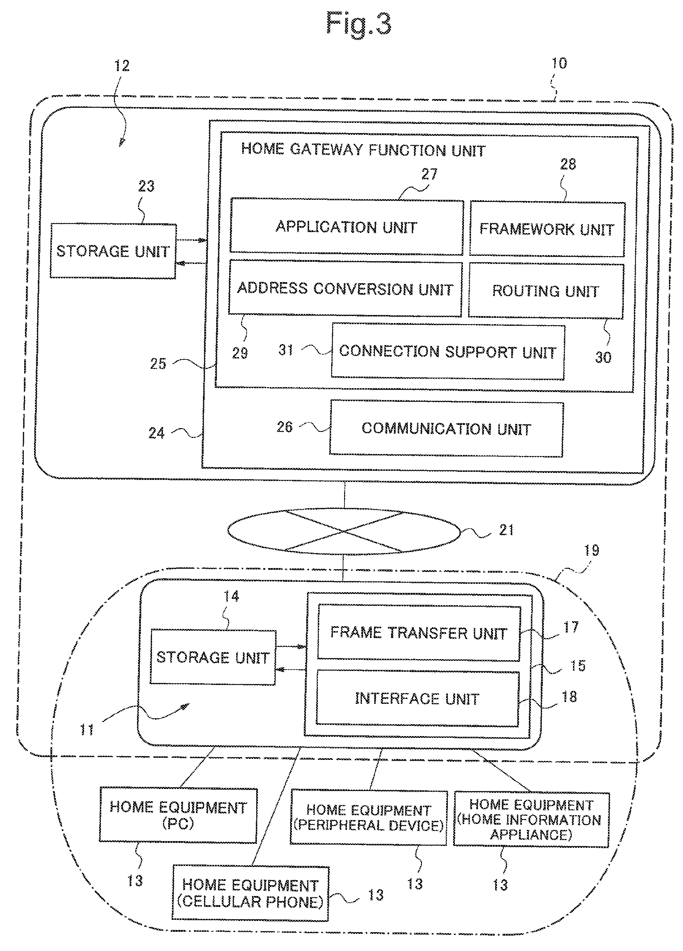

A second exemplary embodiment of the present invention will be described below. In the exemplary embodiment, a home gateway virtual system, which is a communication relay system, will be described with reference to Fig. 3. That is, Fig. 3 is a block diagram showing a control configuration configuring the home gateway virtual system which is the communication relay system according to the second exemplary embodiment.

The home gateway virtual system 10 in the second exemplary embodiment includes a communication relay apparatus 11 and a communication control apparatus 12, as described, below.

The communication relay apparatus 11 is a so-called home gateway apparatus. An installation location of the communication relay apparatus 11 is in a predetermined local area (in homes, for example). In the local area, a home equipment 13, which is an electronic apparatus (communication apparatus) having a communication function, is arranged. The home equipment 13 is arranged in the local area (in homes, for example). In the home equipment 13, for example, there are a equipment of an information processing system including personal computer (PC) and printer, a equipment of a phone system including cellular phone and facsimile, and a equipment of a home information appliance system including microwave, air conditioner, water heater, television and video recorder or the like. The communication relay apparatus 11 connects with one or more of the home equipment 13 as mentioned above, hereby, a local computer network (LAN(Local Area Network), home network) 19 is configured. In addition, a communication method used by this computer network is not limited in particular, and a suitable communication method may be adopted. In the second exemplary embodiment, a description of the communication method will be omitted.

The communication relay apparatus 11 includes a storage unit 14, a control apparatus 15 and a connection terminal (not shown). The connection terminal is a terminal (phone line terminal and terminal for a LAN, for example) used for a connection with other apparatus (such as the home equipment 13).

The storage unit 14 is an apparatus (Hard Disk storage, for example) including computer-readable storage media in which various data and a computer program (software program; hereinafter, referred simply to as a program) are stored.

The control apparatus 15 has an arithmetic unit (CPU (not shown), for example). By executing various programs stored in the storage unit 14, the control apparatus 15 controls overall operation of the communication relay apparatus 11. For example, by executing the program, the control apparatus 15 has a function block as follows. That is, the control apparatus 15 includes a frame transfer unit (frame transfer means) 17 and an interface unit (interface means) 18.

The interface unit 18 has a function to connect the home equipment 13 to the connection terminal based on the above-mentioned program. In other words, in the second exemplary embodiment, the storage unit 14 stores a program which the interface unit 18 executes. The program is a program about the communication connection. The program is created to correspond to the communication method which the home equipment 13 being a connection target uses for communication. By controlling an operation of the own apparatus based on the program, the interface unit 18 has a function to connect the communication relay apparatus 11 and the home equipment 13 by a software.

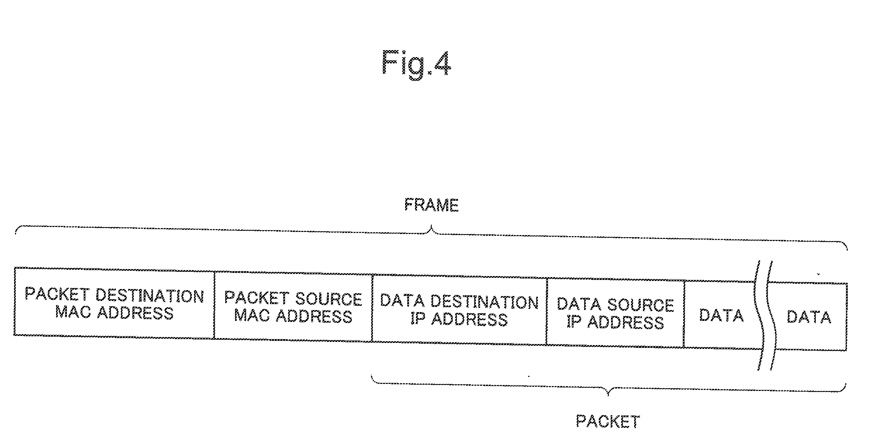

The frame transfer unit 17 has a function to receive a frame as follows from the home equipment 13. The frame is a unit of data transmission when transmitting data. Fig. 4 is a diagram illustrating an example of the frame by an image. As illustrated by Fig. 4, when data is transmitted (communicated), communication control information is attached to the data hereof. The communication control information includes address information as source information in the data and address information as destination information in the data. For example, each address information hereof is an IP (Internet Protocol) address. Sequence of information (data) including the data and the communication control information may be called a packet.

Communication control information on the packet is attached to the packet hereof. The communication control information includes source information and destination information in the packet. Each information hereof, for example, is a MAC (Media Access Control) address. Sequence of the communication control information and information including a packet is called a frame. Further, the IP address has a following types. For example, one of IP addresses is an address having the form based on the Internet Protocol as IPv4 (Internet Protocol version 4) formulated by the International Organization for Standardization (ISO). Another one of IP addresses is an address having the form based on the Internet Protocol as IPv6 (Internet Protocol Version 6) formulated by ISO. Thus, there are plural types for the IP address. The type of IP address to be adopted is set suitably depending on the Internet Protocol which the communication relay apparatus 11 adopts.

The frame transfer unit 17 has a function to transmit (transfer) the received frame for the communication control apparatus 12. The frame transfer unit 17 does not change the source information in the frame into information (address information) indicating the communication relay apparatus 11 itself in case of the transmission hereof. In other words, the frame transfer unit 17 leaves the source information in the frame as information (address information) indicating the home equipment 13 as it stands. The frame transfer unit 17 changes the destination information in the frame from information (address information) indicating the communication relay apparatus 11 into information (address information) indicating the communication controller 12.

The communication relay apparatus 11 is equipped with a negotiation function performed when establishing communication, in addition to the function mentioned above. Various types (such as the type to include an authentication function) for the negotiation function exist. The negotiation function adopted hereof may be of any type. The description of the negotiation function to be adopted will be omitted.

The communication control apparatus 12, for example, is an apparatus (server, for example) managed by a system operator. The communication control apparatus 12 connects with the communication relay apparatus 11 via a communication network 21 such as the Internet. The communication control apparatus 12 includes a storage unit 23 and a control apparatus 24 as shown in Fig. 3.

The storage unit 23 is an apparatus (Hard Disk storage, for example) having computer-readable storage media which stores various data and a program. According to the second exemplary embodiment, in a computer program which the storage unit 23 stores, for example, there are an application program which controls operation of the home equipment 13, a program about framework, and various kinds of programs about controlling communication activity.

The control apparatus 24 includes an arithmetic unit (such as CPU (not shown)). By executing various programs which the storage unit 23 stores, the control apparatus 24 controls overall operation of the communication control apparatus 12. In other words, in the second exemplary embodiment, by executing the program which the storage unit 23 stores, the control apparatus 24 achieves a following function block. That is, the control apparatus 24 includes a home gateway function unit (home gateway function means) 25 and a communication unit (communication means) 26.

The communication unit 26 has a function to establish a connection with the home equipment 13. In the second exemplary embodiment, the connection of the communication part 26 and the home equipment 13 is a connection via the communication network 21 and the communication relay apparatus 11.

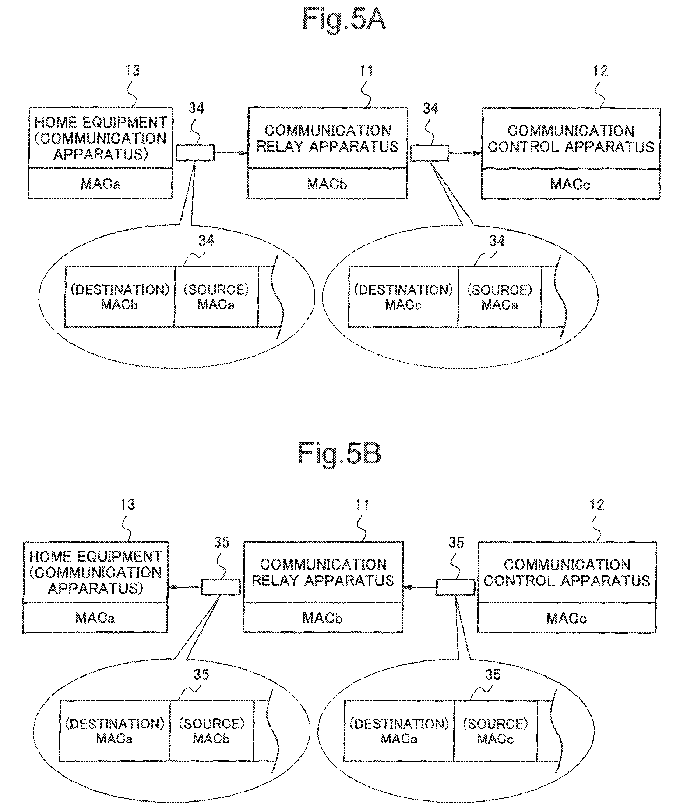

Fig. 5A is a diagram illustrating address information included in the frame transmitted for the communication control apparatus 12 from the home equipment 13 when the connection of the communication unit 26 (the communication control apparatus 12) and the home equipment 13 is established.

It is supposed that the frame transmitted from the home equipment 13 has been transferred to the communication control apparatus 12 by the frame transfer unit 17 of the communication relay apparatus 11. The address information (MAC address), which is the source information included in the frame, is the address information on the home equipment 13. This is, because the source information, as described above, is left as the address information on the home equipment 13 without changing into the address information on the communication relay apparatus 11 when the frame transfer unit 17 of the communication relay apparatus 11 transfers the frame.

In other words, as shown in Fig. 5A, when a frame 34 is transmitted to the communication relay apparatus 11 from the home equipment 13, the address information (MAC address) which is destination information included in the frame 34 is address information "MACb" on the communication relay apparatus 11. Then, when the frame transfer unit 17 of the communication relay apparatus 11 transfers the frame 34 for the communication control apparatus 12, the address information (destination address information) which is the destination information on the frame 34 becomes address information "MACc" on the communication control apparatus 12, by the address conversion operation of the frame transfer unit 17. On the other hand, not only when the frame 34 is transmitted to the communication relay apparatus 11 from the home equipment 13, but also when transferred to the communication control apparatus 12 from the communication relay apparatus 11, the address information (source address information) which is source information included in the frame 34 remains the address information "MACa" on the home equipment 13.

The communication unit 26 has a function to extract the source address information from the frame 34 when the frame 34 is received from the communication relay apparatus 11. The communication unit 26 has a function to create a frame 35 which is set the extracted source address information as destination information. The communication unit 26 has a function to transmit (reply) the created frame 35.

Fig. 5B is a diagram illustrating the address information included in the frame 35 when the frame 35 is transmitted for the home equipment 13 from the communication control apparatus 12. As shown in Fig. 5B, the destination address information in the frame 35 transmitted from the communication control apparatus 12 is the address information "MACa" on the home equipment 13. On the other hand, the communication control apparatus 12 recognizes the address information "MACa" on the home equipment 13 as the address information on the communication relay apparatus 11 based on the source address information "MACa" in the received frame 34. For this reason, the frame 35 transmitted from the communication control apparatus 12 is transmitted to the communication relay apparatus 11. As a result, the frame 35 follows a route (route from the home equipment 13 to the communication control apparatus 12 via the communication relay apparatus 11) of the frame 34 reversely, and is transmitted from the communication control apparatus 12 to the home equipment 13.

By communication of such frames 34 and 35, the connection of the home equipment 13 and the communication control apparatus 12 establishes. As a result, the home equipment 13 and the communication control apparatus 12 is regarded as to be in a state as the same broadcast domain (home network). Thus, by the home equipment 13 and the communication control apparatus 12 becoming the same broadcast domain, the home equipment 13 can send a broadcast packet to the communication control apparatus 12.

The home gateway function unit 25 (see Fig. 3) has the home gateway function. The home gateway function has many types. In the second exemplary embodiment, the home gateway function unit 25 performs one or more home gateway function selected suitably from the home gateway function of those various types. For example, as the home gateway function, the home gateway function unit 25 includes an application function, a framework function, an address conversion function, a routing function, and a connection support function. That is, the home gateway function unit 25 includes an application unit 27, a framework unit 28, an address conversion unit 29, a routing unit 30, and a connection support unit 31 which each performs as above-mentioned home gateway function.

The application unit (application means) 27 has a function to control the operation of the home equipment 13 based on an application program that the storage unit 23 stores. In other words, the application unit 27 functions as an apparatus control unit (apparatus control means) which controls the operation of the home equipment (communication apparatus) 13.

The framework unit (framework means) 28 has a function to operate based on a program that the storage unit 23 stores concerning framework.

The address conversion unit (address conversion means) 29 has a NAT (Network Address Translation) function. The NAT function is a function to convert a local address (local IP address) included in the frame into a global address (global IP address), or vice versa. There are also plural versions about the NAT function. For example, as a version of the NAT function, there are the versions based on the IPv4 (Internet Protocol) and the IPv6 (Internet Protocol) respectively. The version of the NAT function to be adopted is set suitably depending on the Internet Protocol which the communication relay apparatus 11 or the like adopts.

The routing unit (routing means) 30 has a routing function to set a communication path routing the frame. Further, there are many variations for a specification concerning the routing. The specification of the routing to be adopted may be of any type.

The connection support unit (connection support means) 31 has a function, as one of a DHCP (Dynamic Host Configuration Protocol) function, for example, to give a local IP address to the home equipment 13 when the local IP address is requested from the home equipment 13 which the connection is established by the communication unit 26. In other words, the connection support unit 31 functions as a local address giving unit (local address giving means) giving the local address in the communication network to the communication relay apparatus 11 and the home equipment 13.

There are a plurality of versions such as DHCPv4 (Dynamic Host Configuration Protocol Version 4) and DHCPv6 (Dynamic Host Configuration Protocol Version 6) for the DHCP function. The DHCPv4 is a version of the DHCP function based on the IPv4 (Internet Protocol). The DHCPv6 is a version of the DHCP function based on the IPv6 (Internet Protocol). The version of the DHCP function which is adopted is set suitably depending on the Internet Protocol which the communication relay apparatus 11 or the like adopts.

The home gateway virtual system 10 in the second exemplary embodiment is configured as mentioned above. In the home gateway virtual system 10, the communication control apparatus 12 performs many parts of the home gateway function. However, it is recognized apparently as if the communication relay apparatus 11 performs the home gateway function. In other words, the communication control apparatus 12 functions as a virtual home gateway apparatus. The reason for this is that by the frame transfer unit 17 of the communication relay apparatus 11 and the communication unit 26 of the communication control apparatus 12, the home equipment 13 and the communication control apparatus 12 can communicate as the same broadcast domain (home network).

In the second exemplary embodiment, as mentioned above, the communication control apparatus 12 is the substantial home gateway apparatus. For this reason, when the home gateway function is added (extended), a storage place of a computer program concerning the additional function is the storage unit 23 of the communication control apparatus 12. The apparatus that executes the computer program is the control apparatus (CPU) 24 of the communication control apparatus 12. For this reason, adding (extending) the home gateway function can be achieved without worrying about the storage capacity of the storage unit 14 and the processing speed of the control apparatus (CPU) 15 in the communication relay apparatus 11 installed as a home gateway apparatus in home. When an upgrade of the function; in other words a computer program are upgraded, since the computer program is stored in the communication control apparatus 12, a system operators can upgrade the computer program. As a result, the home gateway virtual system 10 is the system excellent in the scalability of the function.

The communication relay apparatus 11 is installed in the local area including the home equipment 13 as the home gateway apparatus. However, in the second exemplary embodiment, substantially, the communication control apparatus 12 performs the home gateway function. For this reason, adding (extending) the home gateway function is performed in the communication control apparatus 12 as mentioned above. As a result, when adding (extending) the home gateway function is planned, the storage capacity of the storage unit 14 and the processing speed of the control apparatus 15 in the communication relay apparatus 11 do not have to be planned to increase. In other words, a problem that the price of the communication relay apparatus 11 rises can be avoided.

That is, in the second exemplary embodiment, the communication relay apparatus 11 and the home gateway virtual system (the communication relay system) 10 can obtain the effect to which it can give multiple functions without worrying about the price increase in like manner of the first exemplary embodiment.

In the second exemplary embodiment, the communication relay apparatus 11 and the communication control apparatus 12 can communicate as the same broadcast domain (home network). For this reason, an address used for communication between the communication relay apparatus 11 and the communication control apparatus 12 can use a local address (local IP address) in the broadcast domain (home network). In other words, a global address (global IP address) does not have to be given to the communication relay apparatus 11. As a result, the home gateway virtual system 10 in the second exemplary embodiment is the system in consideration of a problem depleting the address (IPv4 address) which is the global address (global IP address).

The communication control apparatus 12 has a situation as corresponding to one communication relay apparatus 11 and a situation as corresponding to each of a plurality of communication relay apparatus 11 individually. In addition, the communication control apparatus 12 has a situation as which is a dedicated apparatus for the home gateway virtual system and a situation as having a control function related to the home gateway virtual system in addition to a main control function.

### (Other exemplary embodiment)

The present invention is not limited to the second exemplary embodiment, and the exemplary embodiment can be adopted. For example, in the second exemplary embodiment, as an example in the installation location of the communication relay apparatus 11, it is mentioned in homes. In contrast, the installation location of the communication relay apparatus 11 may be other local places such as company premises and in the public facilities And computer networks built by the communication relay apparatus 11 and the home equipment 13 may be a communication network in the above-mentioned company premises and a communication network in the public facilities.

As mentioned above, by the control apparatuses (arithmetic unit (CPU)) 15 and 24 operating based on a processing procedure indicated on a program, each of the function about the communication function and the home gateway function in the apparatus described in the first and second exemplary embodiments is realized. In other words, the each function is realized by software. In contrast, a part or all of each function may be realized by hardware.

In the meantime, as indicated by the patent document 1, the function included in a home gateway apparatus tends to be increased. For this reason, in order for the home gateway apparatus to perform many functions smoothly, speed-up of the processing speed is required for CPU in the home gateway apparatus, further, increase of the capacity is required for a memory storage. However, the CPU with the fast processing speed and the large-volume memory storage are expensive. For this reason, when the home gateway apparatus equips such expensive the CPU and the memory storage, there is a problem that the price of the home gateway apparatus increases.

Accordingly, when the price increase of the home gateway apparatus tries to be suppressed, it will be difficult to equip expensive the CPU with the fast processing speed and the expensive large-volume memory storage into the home gateway apparatus. For this reason, when the price increase tries to be suppressed, a problem occurs that a further extension of function is difficult for the home gateway apparatus.

In contrast, the communication relay apparatus and the communication relay system in the first and second exemplary embodiments can achieve becoming multifunctional without worrying about the price increase.

## Claims

1. A home gateway virtual system (10) comprising:
a communication relay apparatus (11) connected to a local computer network (19); and
a communication control apparatus (12) which connects with the communication relay apparatus (11) via a global network (21), wherein
the communication relay apparatus (11) includes
frame transfer means (17) for transferring a frame which is a unit of data transfer based on destination information which is a destination MAC address included in the frame, wherein
in case of receiving the frame from within the local computer network (19), the frame transfer means (17) changes the destination information included in the frame from information indicating the communication relay apparatus (11) into information indicating the communication control apparatus (12), which is connected with the communication relay apparatus (11) via the global network (21) without changing source information included in the frame and transfers the frame after the change to the communication control apparatus (12).

2. The home gateway virtual system (10) according to claim 1, wherein
the communication control apparatus (12) includes communication means (26) for replying the frame, in which source information extracted from the received frame is set as destination information, to a communication apparatus (13) corresponding to the source information via the communication relay apparatus (11) and establishing a communication connection with the communication apparatus (13) via the communication relay apparatus (11).

3. The home gateway virtual system (10) according to claim 1 or 2, wherein
the communication control apparatus (12) further includes local address giving means (31) for giving a local address in the local communication network (19) including the communication relay apparatus (11) and the communication apparatus (13), to the communication relay apparatus (11) and the communication apparatus (13).

4. The home gateway virtual system (10) according to claim 3, wherein
the communication control apparatus (12) and the communication relay apparatus (11) performs data communication by using the local address.

5. The home gateway virtual system (10) according to claim 2 or claim 3 or claim 4, wherein
the communication control apparatus (12) further includes apparatus control means (27) for controlling operation of the communication apparatus (13).

6. The home gateway virtual system (10) according to any one of claims 2 to 5, wherein
the communication control apparatus (12) further includes a function to convert a local address in the frame which is communication relay target into a global address and vice versa and a routing function to set a communication path routing the frame.

7. A communication relaying method of utilizing in a home gateway virtual system (10) in which a communication relay apparatus (11) and a communication control apparatus (12) connects via a global network (21), the method comprising:
by the communication relay apparatus (11) connected to a local computer network (19),
receiving a frame which is a unit of data transfer;
transferring the frame based on destination information which is a destination MAC address included in the frame, and
in case of receiving the frame from within the local computer network (19), changing the destination information included in the frame from information indicating the communication relay apparatus (11) into information indicating the communication control apparatus (12), which is connected with the communication relay apparatus (11) via the global network (21), without changing source information included in the frame and
transferring the frame after the change to the communication control apparatus (12).

## Patentansprüche

1. Virtuelles Heim-Gateway-System (10), umfassend:
eine Kommunikationsrelaisvorrichtung (11), die mit einem lokalen Computernetzwerk (19) verbunden ist; und
eine Kommunikationssteuervorrichtung (12), welche mit der Kommunikationsrelaisvorrichtung (11) über ein globales Netzwerk (21) verbunden ist, wobei
die Kommunikationsrelaisvorrichtung (11) ein Rahmenübertragungsmittel (17) zum Übertragen eines Rahmens, welcher eine Datenübertragungseinheit ist, basierend auf Zielinformation enthält, welche eine Ziel-MAC-Adresse ist, die in dem Rahmen enthalten ist, wobei
im Fall von Empfang des Rahmens von innerhalb des lokalen Computernetzwerks (19) das Rahmenübertragungsmittel (17) die Zielinformation, welche in dem Rahmen enthalten ist, von Information, welche die Kommunikationsrelaisvorrichtung (11) angibt, in Information ändert, welche die Kommunikationssteuervorrichtung (12) angibt, welche mit der Kommunikationsrelaisvorrichtung (11) über das globale Netzwerk (21) verbunden ist, ohne Quellinformation zu ändern, die in dem Rahmen enthalten ist, und den Rahmen nach dem Ändern an die Kommunikationssteuervorrichtung (12) überträgt.

2. Virtuelles Heim-Gateway-System (10) nach Anspruch 1, wobei
die Kommunikationssteuervorrichtung (12) ein Kommunikationsmittel (26) zum Beantworten des Rahmen, in welchem Quellinformation, die aus dem empfangenen Rahmen extrahiert ist, als Zielinformation eingestellt ist, an eine Kommunikationsvorrichtung (13) entsprechend der Quellinformation über die Kommunikationsrelaisvorrichtung (11) und Herstellen einer Kommunikationsverbindung mit der Kommunikationsvorrichtung (13) über die Kommunikationsrelaisvorrichtung (11).

3. Virtuelles Heim-Gateway-System (10) nach Anspruch 1 oder 2, wobei
die Kommunikationssteuervorrichtung (12) ferner ein Bereitstellungsmittel für lokale Adressen (31) zum Bereitstellen einer lokalen Adresse in dem lokalen Kommunikationsnetzwerk (19), welches die Kommunikationsrelaisvorrichtung (11) und die Kommunikationsvorrichtung (13) enthält, an die Kommunikationsrelaisvorrichtung (11) und die Kommunikationsvorrichtung (13) enthält.

4. Virtuelles Heim-Gateway-System (10) nach Anspruch 3, wobei
die Kommunikationssteuervorrichtung (12) und die Kommunikationsrelaisvorrichtung (11) Datenkommunikation unter Verwendung der lokalen Adresse durchführen.

5. Virtuelles Heim-Gateway-System (10) nach Anspruch 2 oder Anspruch 3 oder Anspruch 4, wobei
die Kommunikationssteuervorrichtung (12) ferner ein Vorrichtungssteuermittel (27) zum Steuern eines Betriebs der Kommunikationsvorrichtung (13) enthält.

6. Virtuelles Heim-Gateway-System (10) nach einem der Ansprüche 2 bis 5, wobei
die Kommunikationssteuervorrichtung (12) ferner eine Funktion zum Umwandeln einer lokalen Adresse in dem Rahmen, welche ein Kommunikationsrelaisziel ist, in eine globale Adresse und umgekehrt und eine Routingfunktion zum Einstellen eines Kommunikationspfads enthält, welcher den Rahmen routet.

7. Kommunikationsrelaisverfahren zur Benutzung in einem virtuellen Heim-Gateway-System (10), in welchem eine Kommunikationsrelaisvorrichtung (11) und eine Kommunikationssteuervorrichtung (12) über ein globales Netzwerk (21) verbunden sind, wobei das Verfahren umfasst:
durch die Kommunikationsrelaisvorrichtung (11), welche mit einem lokalen Computernetzwerk (19) verbunden ist,
Empfangen eines Rahmens, welcher eine Datenübertragungseinheit ist;
Übertragen des Rahmens basierend auf Zielinformation, welche eine Ziel-MAC-Adresse ist, die in dem Rahmen enthalten ist, und
im Fall von Empfang des Rahmens von innerhalb des lokalen Computernetzwerks (19), Ändern der Zielinformation, welche in dem Rahmen enthalten ist, von Information, welche die Kommunikationsrelaisvorrichtung (11) angibt, in Information, welche die Kommunikationssteuervorrichtung (12) angibt, welche mit der Kommunikationsrelaisvorrichtung (11) über das globale Netzwerk (21) verbunden ist, ohne Quellinformation, die in dem Rahmen enthalten ist, zu ändern, und
Übertragen des Rahmens nach dem Ändern an die Kommunikationssteuervorrichtung (12).

## Revendications

1. Système virtuel de passerelle domestique (10) comprenant :
un appareil de relais de communication (11) connecté à un réseau d'ordinateurs local (19) ; et
un appareil de commande de communication (12) qui se connecte avec l'appareil de relais de communication (11) via un réseau global (21), dans lequel l'appareil de relais de communication (11) comprend
des moyens de transfert de trame (17) pour transférer une trame qui est une unité de transfert de données sur la base d'une information de destination qui est une adresse MAC de destination comprise dans la trame, dans lequel
dans le cas de la réception de la trame depuis l'intérieur du réseau d'ordinateurs local (19), les moyens de transfert de trame (17) changent l'information de destination comprise dans la trame d'une information indiquant l'appareil de relais de communication (11) en une information indiquant l'appareil de commande de communication (12), qui est connecté avec l'appareil de relais de communication (11) via le réseau global (21) sans changer une information de source comprise dans la trame et transfèrent la trame après le changement à l'appareil de commande de communication (12).

2. Système virtuel de passerelle domestique (10) selon la revendication 1, dans lequel
l'appareil de commande de communication (12) comprend des moyens de communication (26) pour répliquer la trame, dans laquelle une information de source extraite de la trame reçue est définie comme une information de destination, vers un appareil de communication (13) correspondant à l'information de source via l'appareil de relais de communication (11) et établir une connexion de communication avec l'appareil de communication (13) via l'appareil de relais de communication (11).

3. Système virtuel de passerelle domestique (10) selon la revendication 1 ou 2, dans lequel
l'appareil de commande de communication (12) comprend en outre des moyens donnant une adresse locale (31) pour donner une adresse locale dans le réseau de communication local (19) comprenant l'appareil de relais de communication (11) et l'appareil de communication (13), à l'appareil de relais de communication (11) et à l'appareil de communication (13).

4. Système virtuel de passerelle domestique (10) selon la revendication 3, dans lequel
l'appareil de commande de communication (12) et l'appareil de relais de communication (11) effectuent une communication de données en utilisant l'adresse locale.

5. Système virtuel de passerelle domestique (10) selon la revendication 2 ou la revendication 3 ou la revendication 4, dans lequel
l'appareil de commande de communication (12) comprend en outre des moyens de commande d'appareil (27) pour commander le fonctionnement de l'appareil de communication (13).

6. Système virtuel de passerelle domestique (10) selon l'une quelconque des revendications 2 à 5, dans lequel
l'appareil de commande de communication (12) comprend en outre une fonction pour convertir une adresse locale dans la trame qui est la cible de relais de communication en une adresse globale et vice versa et une fonction de routage pour définir un trajet de communication routant la trame.

7. Procédé de relais de communication consistant à utiliser un système virtuel de passerelle domestique (10) dans lequel un appareil de relais de communication (11) et un appareil de commande de communication (12) se connectent via un réseau global (21), le procédé comprenant :
par l'appareil de relais de communication (11) connecté à un réseau d'ordinateurs local (19),
la réception d'une trame qui est une unité de transfert de données ;
le transfert de la trame sur la base d'une information de destination qui est une adresse MAC de destination comprise dans la trame, et
dans le cas de la réception de la trame depuis l'intérieur du réseau d'ordinateurs local (19), le changement de l'information de destination comprise dans la trame d'une information indiquant l'appareil de relais de communication (11) en une information indiquant l'appareil de commande de communication (12), qui est connecté avec l'appareil de relais de communication (11) via le réseau global (21), sans changer une information de source comprise dans la trame et
le transfert de la trame après le changement à l'appareil de commande de communication (12).
